# EUROPÄISCHE PATENTSCHRIFT

(11) **EP 0 918 174 B1**
(45) Veröffentlichungstag und Bekanntmachung des Hinweises auf die Patenterteilung: **02.01.2003**
(21) Anmeldenummer: 98121871.2
(22) Anmeldetag: 18.11.1998
(51) Int. Cl.: F16H 19/06

(54) **Lineareinheit mit motorischem Stellantrieb**
Linear actuator with motor drive
Actionneur linéaire à entraînement motorisé

(30) Priorität: 19.11.1997 DE 29720518 U
(43) Veröffentlichungstag der Anmeldung: 26.05.1999
(73) Patentinhaber: ERO-Führungen GmbH Erich Rothweiler & Söhne, 79843 Löffingen/Unadingen (DE)
(72) Erfinder: Rothweiler, Lothar, 79843 Löffingen/Unadingen (DE)
(74) Vertreter: Neymeyer, Franz, Dipl.-Ing. (FH)

(56) Entgegenhaltungen:
- EP-A- 0 735 296
- DE-A- 3 628 329
- DE-C- 3 743 577
- DE-U- 29 720 518
- US-A- 3 832 910
- "Lineareinheit NC-10" ERO-FÜHRUNGEN GMBH, September 1995 (1995-09), Seiten 1-4, XP002143542 ERO-Führungen Gmbh, Erich Rothweiler & Söhne, Löffingen/Unadingen

## Beschreibung

Die Erfindung betrifft eine Lineareinheit mit einem motorischen Stellantrieb für einen auf Führungsschienen eines aus einer hohlen Profilschiene bestehenden Grundkörpers zwischen zwei Endanschlägen längs verschiebbaren Stellschlitten, der mit den Enden eines in Verschieberichtung verlaufenden, über eine Umlenkzahnrolle und über eine von einem Stellmotor angetriebene Antriebszahnrolle gespannten Zahnriemens verbunden ist, wobei die Umlenkzahnrolle mittels einer Spanneinrichtung relativ zur Antriebszahnrolle verstellbar und in einer bestimmten Stellung fixierbar ist.

Aus dem Firmenprospekt 9/95 der Fa. ERO-Führungen GmbH, Erich Rothweiler & Söhne, 79843 Löffingen/Unadingen, ist ein Linearantrieb der gattungsgemäßen Art mit der Bezeichnung NC-100 bekannt geworden, welcher im wesentlichen aus einer hohlen Profilschiene als Grundkörper, einem längsverschiebbaren Stellschlitten, sowie einem über einen Stellmotor zur Längsverschiebung des Stellschlittens entlang des Grundkörpers angetriebenen Zahnriementrieb besteht. Zur Längsverschiebung des Stellschlittens sind auf der Oberseite der Profilschiene zwei parallel zueinander verlaufende Führungsschienen vorgesehen, auf welchen der Stellschlitten mittels jeweils zweier Führungswagen längsverschiebbar gelagert ist. Zur Begrenzung des Stellweges des Stellschlittens auf dem Grundkörper bzw. auf der Profilschiene weist diese in ihren beiden Endbereichen entsprechende Stellanschläge auf, gegen welche der Stellschlitten bei Erreichen seiner jeweiligen Endstellung aufläuft.

Die beiden Führungsschienen sind auf zwei in einer gemeinsamen Horizontalebene liegenden und parallel zur vertikalen Längsmittelebene der Profilschiene verlaufenden Lagerstegen der Profilschiene festsitzend montiert, wobei die Lagerstege über deren gesamte Länge einen konstanten Abstand voneinander aufweisen. Die beiden Lagerstege sind jeweils im oberen Endbereich zweier äußerer im wesentlichen vertikal verlaufenden Stegwände nach innen gerichtet angeformt, welche unterseitig über eine Bodenplatte der Profilschiene miteinander verbunden sind. Somit bilden die Stegwände, die Lagerstege und die Bodenplatte eine einstückige Einheit, welches als gezogenes AluminiumStrangpreßprofil ausgebildet ist. Die Profilschiene bzw. der Grundkörper ist beidseitig jeweils durch eine stirnseitig verschraubte Stirnplatte verschlossen.

Der Zahnriementrieb weist eine Antriebszahnrolle, eine Umlenkzahnrolle sowie einen Zahnriemen auf, welcher in Längsrichtung der Profilschiene innerhalb des Hohlraumes der Profilschiene angeordnet ist. Die Antriebszahnrolle ist bei der bekannten Lineareinheit im einen Endbereich der Profilschiene auf einer Antriebswelle drehfest gelagert, wobei diese Antriebswelle quer zur Längsrichtung der Profilschiene verlaufend, in den Endbereichen der Stegwände drehbar gelagert ist. Zur drehbaren Lagerung der Antriebswelle in den Stegwänden sind entsprechende Wälzlager vorgesehen. Zum Antrieb der Antriebszahnrolle bzw. zum Antrieb der Antriebswelle weist diese außenseitig auf einer Seite ihres außerhalb der Profilschiene liegenden Wellenendes eine weitere Zahnrolle auf, welche über einen entsprechend ausbildeten Zahnriemen mit einem Stellmotor, beispielsweise einem Schrittmotor, drehbar gekoppelt ist. Der Schrittmotor ist über eine etwa rechtwinklig zur Antriebswelle verlaufende Lagerplatte, welche wahlweise außenseitig an einer der beiden Stegwände der Profilschiene befestigbar ist, oberhalb oder unterhalb der Profilschiene anordenbar.

Im der Antriebszahnrolle gegenüberliegenden Endbereich der Profilschiene ist die Umlenkzahnrolle auf einer entsprechenden Umlenkachse drehbar gelagert. Im montierten Zustand umschließt der Zahnriemen sowohl die Antriebszahnrolle als auch die Umlenkzahnrolle, wobei zum Spannen des Zahnriemens die Umlenkachse der Umlenkzahnrolle in Längsrichtung der Profilschiene in einer parallel zu den Lagerstegen verlaufenden Schlitzführung in den Stegwänden der Profilschiene verschiebbar ist. Zum Spannen bzw. zur Längsverschiebung der Umlenkachse sind Spannschrauben vorgesehen, durch welche die Umlenkachse entsprechend in Längsrichtung der Profilschiene in Längsschlitzen der Stegwände, welche die Schlitzführung bilden, verschiebbar ist.

Zur lagegenauen Positionierung der Umlenkachse der Umlenkzahnrolle in Längsrichtung der Profilschiene sind in den Längsschlitzen, welche zur Stirnseite der Profilschiene hin offen ausgebildet sind, zwischen der Lagerachse und der Stirnplatte Distanzhülsen vorgesehen, durch welche die Stellschrauben hindurchragen und mit der Umlenkachse in deren jeweils zugeordneten äußeren Endbereichen verschraubt sind. Durch Anziehen der Spannschrauben wird die Umlenkachse gegen die Distanzhülsen gepreßt und nimmt eine von der jeweiligen Länge der Distanzhülsen definierte Lage in Längsrichtung der Profilschiene ein.

Diese Art der Positionierung der Umlenkachse der Umlenkzahnrolle zum Einstellen eines bestimmten Abstandes der Umlenkachse zur Antriebswelle der Antriebszahnrolle erfordert es, vorab die erforderliche, von der Länge des Zahnriemens abhängige Spannlänge und damit den erforderlichen Abstand zwischen der Antriebswelle und der Umlenkachse genau festzulegen, um eine definierte Vorspannung für einen annähernd spielfreien Antrieb des Zahnriementriebes erreichen zu können. Dadurch sind insbesondere die herstellungsbedingten Toleranzen des Zahnriemens aber auch Längenausdehnungen aufgrund thermischer Ausdehnung der Profilschiene insbesondere bei größeren Längen der Lineareinheit nur schwer oder gar nicht berücksichtigbar. Desweiteren muß für jede Hublänge des bekannten Linearantriebes und somit für die damit in unterschiedlichen Längen zu verwendenden Zahnriemen eine derartige Berechnung neu erstellt werden, um die vorgeschriebene Vorspannung des Zahnriemens wenigstens annähernd erreichen zu können.

Desweiteren ist aus Patentschriff DE-PS 3 743 577 C1 eine Lineareinheit bekannt geworden, die alle Merkmale des Oberbegriffs des unabhängigen Anspruchs 1 zeigt, deren Grundkörper ebenfalls aus einer Profilschiene mit Laufschienen gebildet ist, auf welchem zwischen einer Endplatte und einer Antriebseinheit ein Laufwagen in Längsrichtung der Profilschiene verfahrbar ist. An der Unterseite des Laufwagens sind die beiden Enden eines Zahnriemens befestigt, der über eine von einem Schrittschaltmotor angetriebene Antriebszahnrolle und einer Umlenkzahnrolle geführt ist. Die Spannung des Zahnriemens erfolgt dadurch, daß die Umlenkzahnrolle beim Spannen des Zahnriemens mit Hilfe von Schrauben gegen eine stirnseitige Endplatte der Profilschiene bewegt wird und an diese geschraubt wird. Dabei sind ebenfalls Distanzstücke zwischen der Umlenkachse der Umlenkzahnrolle und der Endplatte der Profilschiene vorgesehen, so daß durch diese Distanzstücke der Stellweg beim Spannen des Zahnriemens durch Verschieben der Umlenkzahnrolle in Längsrichtung der Profilschiene begrenzt ist. Hierbei treten dieselben Problematiken wie bei der zuvor beschriebenen Lineareinheit auf.

Insbesondere ist die Abstandsberechnung zwischen der Antriebszahnrolle und der Umlenkzahnrolle äußerst kompliziert, da sich die Längenangabe des Zahnriemens in der Praxis immer nur auf den eingebauten und vorgespannten Zustand bezieht. Wie aus dem angegebenen Dokument (a.a.O.) hervorgeht, wird ein Zahnriemen mit starkem Untermaß gefertigt und kann somit nicht durch eine einzige Maßangabe für einzelne Lineareinheiten zugeschnitten werden. Da aber der Zahnriemen mit einer genau vorbestimmten Vorspannung zum Erreichen eines spielfreien Eingriffes mit der Antriebszahnrolle bzw. mit der Umlenkzahnrolle vorgespannt sein muß, ist die in der angegebenen Druckschrift vorgeschlagene Abstandsberechnung des erforderlichen Abstandes zwischen der Antriebswelle und der Umlenkachse für einen bestimmten Zahnriemen äußerst kompliziert und ungenau.

Weiterhin sind die bekannten Lineareinheiten bzgl. ihrer Montage, insbesondere wenn unterschiedliche Längen zur Verfügung gestellt werden sollen, äußerst kompliziert. So müssen vorab insbesondere in der Profilschiene sämtliche Bohrungen vor allem für die Antriebswelle in deren einem Endbereich sowie die Führungsschlitze der Schlitzführung für die Umlenkachse im anderen Endbereich vorab gefertigt werden. Eine solche Fertigung kann allerdings erst nach der Bestellung durchgeführt werden, da erst dann die gewünschte Gesamtlänge der Lineareinheit bekannt ist.

Ebenso ist die Anordnung des Stellmotors nicht in beliebiger Weise veränderbar, da der Stellmotor direkt über die Montageplatte mit der Profilschiene zu verschrauben ist. Somit kann auch die Montagestellung der Montageplatte an der Profilschiene erst mit der Bestellung einer Lineareinheit und den damit festgelegten Anforderungen erfolgen. Dies hat einen erheblichen Aufwand zum Erreichen eines präzise arbeitenden Linearantriebes und auch größere Lieferzeiten zur Folge.

Der Erfindung liegt die Aufgabe zugrunde, eine Lineareinheit der eingangs genannten Art zu schaffen, die einfach montierbar und die mit einer einfach einstellbaren Spanneinrichtung für den Zahnriemen versehen ist.

Gelöst wird diese Aufgabe erfindungsgemäß dadurch, daß die Umlenkzahnrolle in einem Rollenhalter gelagert ist, der mit zwei durch eine quer verlaufende Stirnwand verbundenen, längsseitigen Seitenwänden endseitig im Hohlraum des Grundkörpers angeordnet und durch eine zentrale Spannschraube, welche die Stirnwand mit einer Stirnplatte des Grundkörpers verbindet, mittels eines auf eine bestimmte Zugspannung einstellbaren Drehmomentschlüssels in seine Spannposition bringbar und in dieser Spannposition mittels einer entfernt von der Spannschraube angeordneten Klemmschraube durch Verklemmen und/oder Verkanten im Grundkörper fixierbar ist.

Durch die erfindungsgemäße Ausgestaltung der Lineareinheit ist unabhängig von der Grundlänge des Zahnriemens dessen benötigte Vorspannung stets präzise einstellbar. Dazu wird ein Rollenhalter verwendet, in welchem die Umlenkzahnrolle mit ihrer Umlenkachse drehbar gelagert ist. Dieser Rollenhalter weist dazu zwei Seitenwände auf, welche im montierten Zustand parallel zu den Stegwänden der hohlen Profilschiene verlaufen und mittels einer quer verlaufenden Stirnwand miteinander verbunden sind. In dieser Stirnwand des Rollenhalters ist ein zentrales Innengewinde vorgesehen, in welches eine Spannschraube einschraubbar ist, durch welche die Stirnwand bzw. der gesamte Rollenhalter mit seiner Stirnwand mit einer Stirnplatte des Grundkörpers bzw. der hohlen Profilschiene verbindbar ist. Zur Einstellung der benötigten Zugspannung des Zahnriemens wird die Spannschraube drehmomentgesteuert, beispielsweise mittels eines Drehmomentschlüssels, mit einem vorbestimmbaren Drehmoment angezogen, so daß der Rollenhalter mit einer entsprechenden Zugkraft gegen die Stirnplatte des Grundkörpers gezogen wird. Bei Erreichen des eingestellten maximalen Drehmomentes ist somit die benötigte Zugspannung des Zahnriemens sicher erreichbar. Gleichzeitig ergibt sich auch automatisch eine entsprechende Spannposition des Rollenhalters, wobei diese aufgrund der Toleranzen des Zahnriemens variiert.

Um während des Betriebes ein unbeabsichtigtes Lösen des Rollenhalters aus seiner Spannposition zu verhindern, ist weiterhin eine Klemmschraube vorgesehen, welche beispielsweise im Abstand zur Spannschraube in die Stirnwand des Grundkörpers einschraubbar ist, so daß beim Anziehen der Klemmschraube durch die dadurch hervorgerufene erhöhte Gewindereibung einerseits ein Lösen der Spannschraube sicher verhindert wird. Desweiteren wird durch die von der Spannschraube beabstandete Anordnung der Klemmschraube ein Verklemmen und/oder Verkanten des Rollenhalters im Grundkörper bzw. in der Profilschiene erreicht, wodurch der Rollenhalter in seiner Spannposition klemmend fixiert ist.

Durch die Ausgestaltung gemäß Anspruch 2 wird eine annähernd spielfreie Führung des Rollenhalters bei gleichzeitiger axialer Verschiebbarkeit im Hohlraum des Grundkörpers erreicht. Dazu erstrecken sich die Seitenwände des Rollenhalters im Hohlraum der Profilschiene bzw. des Grundkörpers von dessen unterem Bodenelement bis zu den inneren Begrenzungsflächen zweier Lagerstege, welche jeweils von einer Stegwand der Profilschiene nach innen vorspringen. Die Seitenwände des Rollenhalters weisen jeweils eine Höhe auf, welche dem lichten Abstand zwischen dem Bodenelement und den beiden Lagerstegen entspricht. Die Lagerwände können allerdings in ihrer Höhe auch minimal kleiner als dieser lichte Abstand ausgebildet sein, um eine geringe Kippbewegung des Rollenhalters in der Profilschiene beim Anziehen der Klemmschraube zu ermöglichen und somit ein sicheres Verklemmen bzw. Verkanten des Rollenhalters in der Profilschiene zu gewährleisten.

Durch die Anordnung der Spannschraube in Achshöhe der Umlenkzahnrolle gemäß Anspruch 3 ist ein zentrales Spannen des Zahnriemens unter Ausschluß eines unbeabsichtigten Verkantens sichergestellt. Damit wird sicher gewährleistet, daß mit dem vorbestimmten Drehmoment, mit welchem die Spannschraube angezogen wird, auch die gewünschte Zugkraft für die erforderliche Vorspannung des Zahnriemens sicher erreichbar ist. Weiterhin wird durch die Anordnung der Klemmschraube in der Nähe des oberen oder unteren Randes der Stirnplatte in einer entsprechenden axialen Gewindebohrung der Stirnplatte der Profilschiene und deren Einwirkung in Längsrichtung auf die Stirnwand des Rollenhalters sicher ein Verklemmen oder Verkanten des Rollenhalters im Grundkörper bewirkt.

Zum Feststellen des Rollenhalters in der Profilschiene kann gemäß Anspruch 4 auch in den Stegwänden der Profilschiene jeweils eine in Querrichtung auf den Rollenhalter einwirkende Klemmschraube vorgesehen sein, so daß der Rollenhalter beim Festziehen dieser Klemmschrauben sicher klemmend in der Profilschiene gehalten wird und seine Spannposition während des Betriebes der Lineareinheit sicher beibehält.

Durch die Ausgestaltung gemäß Anspruch 5 wird sichergestellt, daß der Rollenhalter zumindest während des Spannens des Zahnriemens und damit während seiner beim Spannen erforderlichen Axialverschiebung in der Profilschiene nicht in unerwünschter Weise verkanten kann. Die in Längsrichtung verlaufende Führungsrippe greift dabei formschlüssig und längsverschieblich in eine entsprechende Führungsnut des Bodenelementes des Grundkörpers bzw. der Profilschiene ein.

Gemäß Anspruch 6 können die beiden Seitenwände des Rollenhalters unterseitig durch eine Bodenplatte miteinander verbunden sein, wobei die Bodenplatte unterseitig zwei parallel zueinander verlaufende Führungsrippen aufweist, welche in zwei entsprechenden Führungsnuten des Bodenelementes des Grundkörpers längsverschiebbar geführt sind. Durch diese Maßnahme wird ebenfalls eine präzise Ausrichtung des Rollenhalters in Längsrichtung der Profilschiene sichergestellt, so daß beim Spannvorgang und damit bei der Längsverschiebung des Rollenhalters in der Profilschiene sich der Rollenhalter nicht verkanten kann. Weiterhin wird durch diese Führung des Rollenhalters in der Profilschiene eine präzise Ausrichtung auch in seiner Spannposition erreicht, so daß auch eine präzise Führung des Zahnriemens auf der Umlenkzahnrolle sichergestellt ist.

Durch die Ausgestaltung gemäß Anspruch 7 sind unterschiedliche Längen der gesamten Lineareinheit in einfachster Weise herstellbar. Insbesondere durch die Anordnung der Antriebszahnrolle und einer zweiten Zahnriemenrolle, welche auf der Antriebswelle der Antriebszahnrolle drehfest gelagert ist, in der Längsmitte eines am Ende des Grundkörpers angesetzten Lagerelementes, ist eine Vormontage dieser Einheit unabhängig von der endgültigen Länge der gesamten Lineareinheit durchführbar. Eine der seitlichen Stegwände des Lagerelementes weist dabei eine Montageplatte auf, an welcher der Stellmotor befestigt ist. Die beiden Stirnflächen des Lagerelementes sind für die wahlweise Montage am Grundkörper mit Bohrungen versehen, die in Form und Anordnung zu einer vertikalen Symmetrieebene symmetrisch sind und wahlweise für die Aufnahme von Befestigungsschrauben und Zentrierzapfen verwendbar sind. Durch diese Ausgestaltung des Lagerelementes ist dieses wechselseitig mit seinen beiden Stirnflächen wahlweise mit der Profilschiene der Lineareinheit kuppelbar. Dadurch lassen sich wahlweise unterschiedliche Positionen und Anordnungen des motorischen Antriebes gegenüber dem Grundkörper bzw. der Profilschiene erreichen.

Dadurch, daß das Lagerelement gemäß Anspruch 8 aus dem gleichen Schienenprofil wie der Grundkörper besteht, sind die Kupplungselemente zwischen Lagerelement und Grundkörper äußerst präzise anbringbar, so daß eine präzise Ausrichtung der Antriebszahnrolle gegenüber der Profilschiene bzw. dem Grundkörper sicher auch bei unterschiedlichen Anordnungen des Lagerelementes am Grundkörper erreichbar ist.

Anhand der Zeichnung wird im folgenden die Erfindung näher erläutert. Es zeigt:
- Fig. 1: eine Seitenansicht einer erfindungsgemäßen Lineareinheit mit Grundkörper, Stellschlitten, Lagerelement sowie Montageplatte für einen Antriebsmotor;
- Fig. 2: eine Draufsicht auf die Lineareinheit gemäß Fig. 1 mit bereichsweisem Teilschnitt durch die Antriebswelle;
- Fig. 3: einen Schnitt III-III aus Fig. 2;
- Fig. 4: einen vergrößerten Ausschnitt IV aus Fig. 3;
- Fig. 5: einen Schnitt V-V aus Fig. 2;
- Fig. 6: eine Schnittdarstellung VI-VI aus Fig. 2 bzw. aus Fig. 1;
- Fig. 7: eine perspektivische Darstellung eines erfindungsgemäßen Rollenhalters.

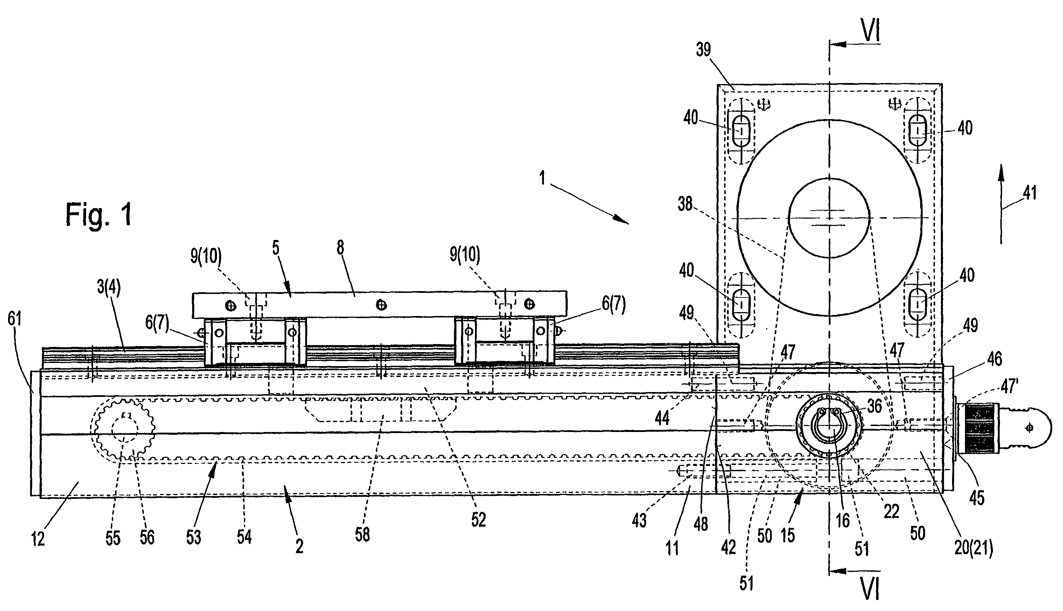

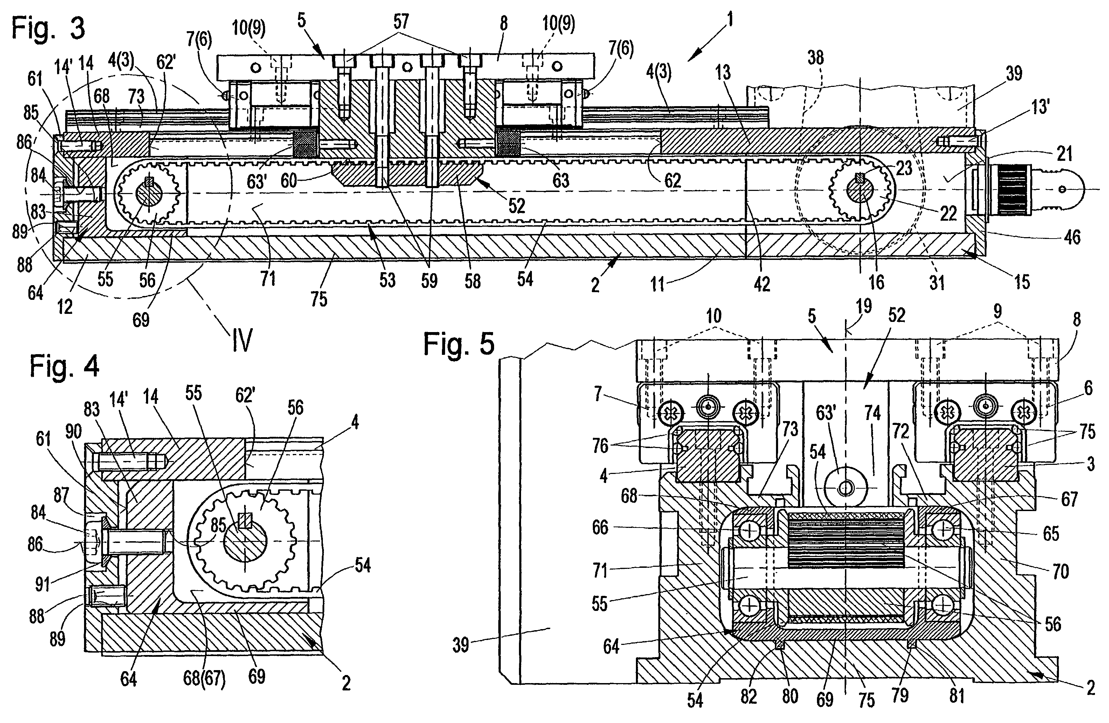

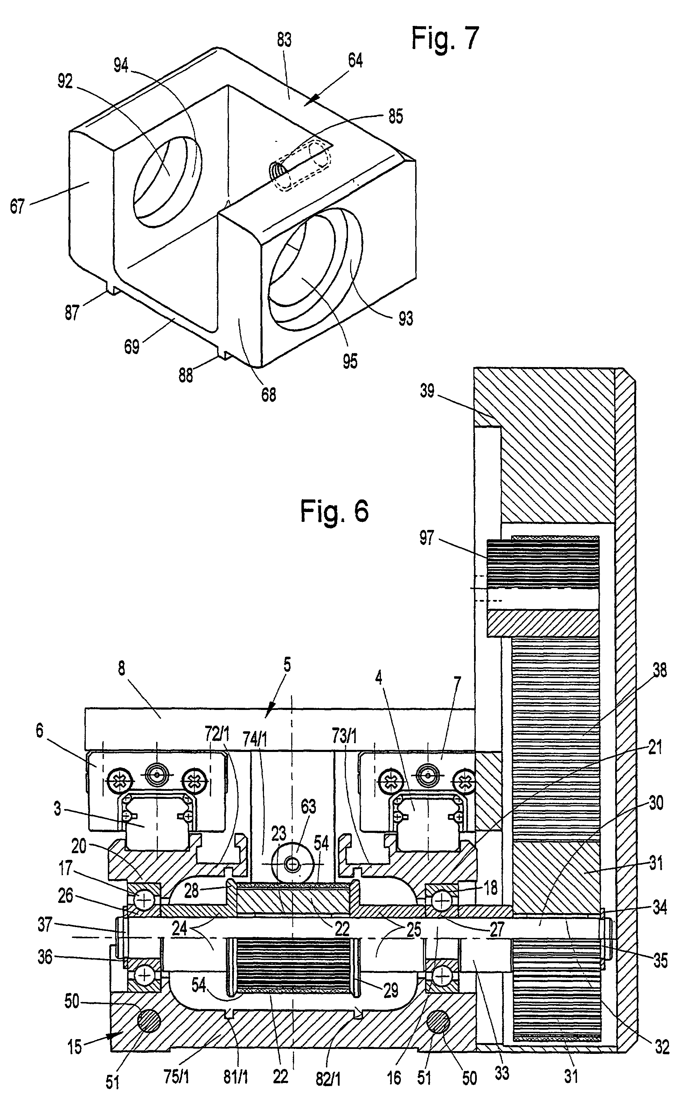

Fig. 1 zeigt eine erfindungsgemäße Lineareinheit 1, welche als Grundkörper eine hohle Profilschiene 2 aufweist. Bei dieser Profilschiene 2 handelt es sich beim gezeigten Ausführungsbeispiel um ein gezogenes Aluminium- Strangpreßprofil, dessen nähere Ausgestaltung weiter unten zu den Fig. 5 und 6 näher beschrieben ist.

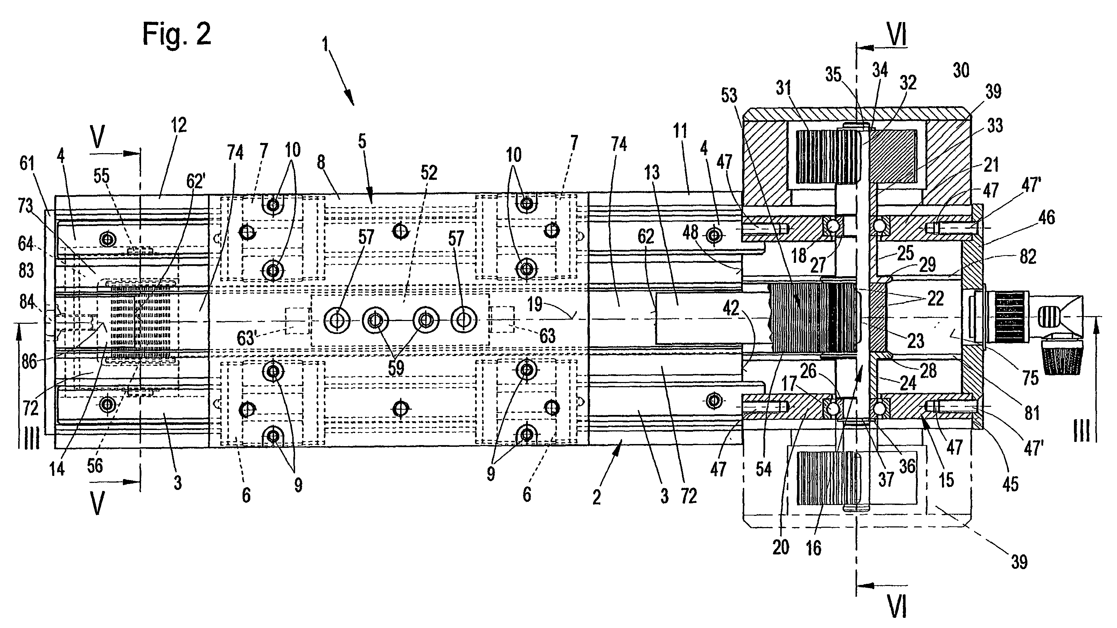

Auf der Profilschiene 2 sind oberseitig zwei parallel zueinander verlaufende, sich wenigstens annähernd über die gesamte Länge der Profilschiene 2 erstreckende Führungsschienen 3, 4 aufgeschraubt, welche zur längsverschiebbaren Führung eines Stellschlittens 5 dienen. Die parallele Anordnung der Führungsschienen 3 und 4 ist insbesondere aus Fig. 2 ersichtlich.

Der Stellschlitten 5 besteht aus vier baugleichen Führungswagen 6 und 7, welche paarweise auf der jeweils zugeordneten Führungsschiene 3 bzw. 4 über ein Kugelsystem in Längsrichtung der Profilschiene 2 verschiebbar leichtgängig gelagert sind. Für die eigentliche Aufnahme eines Werkstückes sind die vier Führungswagen 6 und 7 über eine Tragplatte 8 miteinander verbunden, wobei zur Befestigung der Tragplatte 8 auf den Führungswagen 6 und 7 jeweils Schraubverbindungen 9 bzw. 10 vorgesehen sind. Der so aufgebaute Stellschlitten 5 bildet somit mit seinen vier Führungswagen 6, 7 und seiner Tragplatte 8 zusammen mit den Führungsschienen 3 und 4 eine sogenannte Linearführung, wobei der Stellschlitten 5 in Längsrichtung auf den Führungsschienen 3 und 4 um einen Stellhub verschiebbar ist, welcher durch zwei in den jeweiligen Endbereichen 11 bzw. 12 der Profilschiene 2 angeordnete, etwa plattenförmig ausgebildete Stellanschläge 13 und 14 begrenzt ist.

In Verlängerung der Profilschiene 2 ist in deren einem Endbereich 11 stirnseitig ein Lagerelement 15 angesetzt, welches beim vorliegenden Ausführungsbeispiel aus einem Profilschienenabschnitt gebildet ist, der die gleiche Querschnittsform wie die Profilschiene 2 aufweist. Dieses Lagerelement 15 dient zur drehbaren Lagerung einer Antriebswelle 16, welche über entsprechende Kugellager 17 und 18 quer zur vertikalen Längsmittelebene 19 verlaufend in den parallel zueinander angeordneten seitlichen Stegwänden 20 und 21 des Lagerelementes 15 gelagert ist. Auf der Antriebswelle 16 ist mittig zwischen den beiden Stegwänden 20 und 21 eine Antriebszahnrolle 22 vorgesehen, welche mit der Antriebswelle 16 beispielsweise über eine Paßfederverbindung 23 drehfest verbunden ist. Zur mittigen Ausrichtung der Antriebszahnrolle 22 zwischen den beiden Stegwänden 20 und 21 ist beidseitig zwischen den Stegwänden 20 und 21 und der Antriebszahnrolle 22 jeweils eine Distanzbuchse 24 bzw. 25 vorgesehen. Diese Distanzbuchsen 24 und 25 stützen sich außenseitig am jeweiligen Innenring 26 bzw. 27 des jeweils zugeordneten Kugellagers 17 bzw. 18 in Achsrichtung der Antriebswelle 16 außenseitig ab. Zur Antriebszahnrolle 22 hin weisen die beiden Distanzbuchsen 24, 25 jeweils radial vorstehende Ringstege 28 bzw. 29 auf, welche in ihrem Durchmesser jeweils zumindest minimal größer ausgebildet sind, als der Außendurchmesser der Antriebszahnrolle 22.

Die Antriebswelle 16 durchragt einseitig die eine Stegwand 21 des Lagerelementes 15 und trägt an ihrem äußeren Ende 30 eine weitere Zahnrolle 31, welche ebenfalls über eine Paßfederverbindung 32 drehfest mit der Antriebswelle 16 verbunden ist. Zur axialen Festlegung der Zahnrolle 31 auf der Antriebswelle 16 ist zwischen der Zahnrolle 31 und dem Innenring 27 des Kugellagers 18 eine weitere Distanzhülse 33 vorgesehen, während außenseitig die Zahnrolle 31 mittels eines Sicherungsringes 34, welcher formschlüssig in eine entsprechende Sicherungsnut 35 am Ende der Antriebswelle 16 eingreift, axial festgelegt ist.

An ihrem der Zahnrolle 31 gegenüberliegenden Ende weist die Antriebswelle 16 ebenfalls einen Sicherungsring 36 auf, welcher in einer entsprechend angeordneten Sicherungsnut 37 axial unverschieblich angeordnet ist und somit die Antriebswelle 16 gegenüber dem Innenring 26 des Kugellagers 17 axial festgelegt ist. Somit ist die Antriebswelle 16 zwischen den beiden Stegwänden 20 und 21 axial unverschiebbar festgelegt.

Zum Antrieb der Antriebswelle 16 mit seiner Zahnrolle 31 ist ein in Fig. 1 gestrichelt dargestellter Zahnriemen 38 vorgesehen, welcher durch einen, in der Zeichnung nicht dargestellten, Stellmotor angetrieben ist. Zur Montage des Stellmotors am Lagerelement 15 ist eine Montageplatte 39 außenseitig an der Stegwand 21 des Lagerelementes 15 festsitzend montiert. Zur Aufnahme des nicht dargestellten Stellmotors weist die Montageplatte 39 vier Langlöcher 40 auf, welche zur Befestigung eines entsprechend ausgebildeten Montageflansches des Stellmotors dienen. Durch die Langlöcher 40 ist der Stellmotor in Richtung des Pfeiles 41 verstellbar auf der Montageplatte 39 anordenbar, so daß eine ausreichende Vorspannung des Zahnriemens 38 und somit eine sichere Drehmomentübertragung vom Stellmotor zur Zahnrolle 31 sicher gewährleistet ist.

Wie aus Fig. 1 ersichtlich ist, weist die Profilschiene 2 in ihrer lagerelementseitigen Stirnfläche 42 Gewindebohrungen 43 sowie Zentrierbohrungen 44 auf, so daß das Lagerelement 15 zentriert und festsitzend an der Stirnfläche 42 der Profilschiene 2 befestigt werden kann. Auf seiner der Profilschiene 2 gegenüberliegenden Stirnfläche 45 ist das Lagerelement 15 mit einer Stirnplatte 46 verschlossen, wobei zur Befestigung der Stirnplatte 46 in der Stirnfläche 45 des Lagerelementes 15 Gewindebohrungen 47 vorgesehen sind, in welche entsprechende Befestigungsschrauben 47' einschraubbar sind. Solche Gewindebohrungen 47 sind ebenfalls in der profilschienenseitigen Stirnfläche 48 des Lagerelementes 15 vorgesehen, so daß bei entsprechender Anordnung des Lagerelementes 15 an der Profilschiene 2 die Stirnplatte 46 auch auf der Stirnfläche 48 des Lagerelementes 15 montierbar ist.

Für die wahlweise Anordnung des Lagerelementes 15 mit seinen Stirnflächen 45 oder 48 weisen beide Stirnflächen 45 und 48 etwa im Bereich der seitlichen Stegwände 20 und 21 Zentrierbohrungen 49 sowie zur Verschraubung in ihrem unteren Bereich eine abgesetzte das Lagerelement 15 in Längsrichtung vollständig durchragende Durchgangsbohrung 50 auf (Fig. 1). Zur Verschraubung sind Befestigungsschrauben 51 vorgesehen, welche in die jeweilige Durchgangsbohrung 50, wie dies in Fig. 1 in gestrichelten Linien angedeutet ist, einsteckbar und in die jeweils zugeordnete Gewindebohrung 43 der Profilschiene 2 einschraubbar sind.

Durch die abgesetzte Ausbildung der Durchgangsbohrung 50, welche in ihrer Längsmitte verjüngt abgesetzt ausgebildet ist, ist die Befestigungsschraube 51 von beiden Stirnflächen 45 und 48 des Lagerelementes 15 her in diese Durchgangsbohrung 50 einsteckbar und stützt sich mit ihrem Schraubenkopf jeweils am verjüngten Abschnitt ab, so daß das Lagerelement 15 wahlweise mit seiner Stirnfläche 48 oder mit seiner Stirnfläche 45 auf die Stirnfläche 42 der Profilschiene 2 montierbar und mittels der Befestigungsschraube 51 befestigbar ist.

Durch diese wechselseitige Montierbarkeit des Lagerelementes 15 an der Profilschiene 2 ist eine wahlweise Anordnung der Montageplatte 39 auf beiden Seiten bzgl. der Längsmittelebene 19 der Profilschiene 2 bzw. des Lagerelementes 15 möglich, wie dies durch die in Phantomlinien dargestellte zweite Ausrichtung bzw. Anordnung der Montageplatte 39 in Fig. 2 dargestellt ist. Die Montageplatte 39 für den Stellmotor kann somit unabhängig von der später zu wählenden Ausrichtung des Lagerelementes 15 an der Profilschiene 2 schon fest an der Stegwand 21 des Lagerelementes 15 vormontiert werden. Durch die spätere Wahl der Ausrichtung des Lagerelementes 15 an der Profilschiene 2 ist damit eine linksseitige oder rechtsseitige Anordnung der Montageplatte 39 bezüglich der Profilschiene 2 sicher möglich. Eine solche wahlweise Montagemöglichkeit des Lagerelementes 15 an der Profilschiene 2 kann beispielsweise aufgrund der räumlichen Gegebenheiten beim Einsatz der Lineareinheit 1 erforderlich sein.

Wie aus Fig. 3 ersichtlich ist, ist der Stellschlitten 5 über eine Kupplungseinheit 52 mit einem Zahnriementrieb 53 gekoppelt. Der Zahnriementrieb 53 besteht dabei aus einem Zahnriemen 54, der Antriebszahnrolle 22 mit seiner Antriebswelle 16, welche wie oben beschrieben im Lagerelement 15 gelagert ist, und einer im gegenüberliegenden Endbereich zum Lagerelement 15 in der Profilschiene 2 drehbar gelagerten Umlenkachse 55, auf welcher eine entsprechende Umlenkzahnrolle 56 gelagert ist. Wie aus Fig. 3 ersichtlich ist, ist die Kupplungseinheit 52 über Schraubverbindungen 57 unterseitig an der Tragplatte 8 des Stellschlittens 5 verschraubt und über eine Klemmschiene 58 mit dem Zahnriemen 54 gekoppelt, wobei der Zahnriemen im Bereich der Klemmleiste 58 geteilt sein kann. Die Klemmleiste 58 ist ebenfalls durch Schraubverbindungen 59 mit der eigentlichen Kupplungseinheit 52 verschraubt, so daß der Zahnriemen 54 zwischen der Klemmschiene 58 und der unteren Begrenzungsfläche 60 der Kupplungseinheit 52 festsitzend gehalten ist.

Wie aus Fig. 3 ebenfalls ersichtlich ist, sind die beiden plattenförmigen Stellanschläge 13 und 14 mit den jeweils stirnseitig angeordneten Stirnplatten 46 und 61 jeweils durch Befestigungsschrauben 13' bzw. 14' verschraubt. Zum Anschlag gegen die jeweilige Stirnfläche 62 bzw. 62' der Stellanschläge 13 und 14 sind diesen Stellanschlägen 13 und 14 entsprechende Anschlagpuffer 63 bzw. 63' zugeordnet, welche ihrerseits mit der Kupplungseinheit 52 verschraubt sind.

Fig. 5 zeigt einen Teilschnitt V - V durch die Umlenkzahnrolle 56 im Bereich der Umlenkachse 55 aus Fig. 2. Es ist erkennbar, daß die Umlenkachse 55 in einem separaten Rollenhalter 64 über zwei Kugellager 65 und 66 drehbar gelagert ist. Der Rollenhalter 64 weist zur Aufnahme der Kugellager 65 und 66 zwei parallel zueinander verlaufende Seitenwände 67 und 68 auf, welche unterseitig über eine Bodenplatte 69 einstückig miteinander verbunden sind. Die Länge der Umlenkachse 55 ist, wie aus Fig. 5 ersichtlich ist, auf den lichten Abstand der beiden Stegwände 70 und 71 der Profilschiene 2 derart abgestimmt, daß die Umlenkachse 55 quer zur Profilschiene 2 verlaufend zwischen den Stegwänden 70 und 71 mit Spiel Platz findet.

Desweiteren weist die Profilschiene 2 im Bereich der oberen Endkanten ihrer beiden Stegwände 70 und 71 jeweils zur vertikalen Längsmittelebene 19 der Profilschiene hin ausgerichtete Lagerstege 72 und 73 auf, welche zur Aufnahme der Führungsschienen 3 und 4 dienen und in etwa einer gemeinsamen Horizontalebene liegen. Die Lagerstege 72 und 73 weisen einen Abstand zueinander auf und bilden somit einen Längsdurchbruch 74, in welchen die Kupplungseinheit 52 des Stellschlittens 5 hineinragt und somit in einfacher Weise mit dem Zahnriemen 54 koppelbar ist.

Wie aus Fig. 5 ebenfalls ersichtlich ist, sind die Führungswagen 6 und 7, welche unterseitig mit der Tragplatte 8 durch die Verschraubungen 9 bzw. 10 verschraubt sind, auf den jeweils zugehörigen Führungsschienen 3 und 4 über entsprechende Lagerkugeln 76 bzw. 77 axial verschiebbar gelagert.

Die Höhe der beiden Seitenwände 67 und 68 des Rollenhalters 64 sind in ihrer Höhe auf den lichten Abstand zwischen den nach innen ragenden Lagerstegen 72 und 73 zum unteren Bodenelement 75 der Profilschiene 2 derart abgestimmt, daß der Rollenhalter 64 in der Profilschiene 2 in vertikaler Richtung zumindest annähernd spielfrei aufgenommen ist. Zur symmetrischen Ausrichtung des Rollenhalters 64 zur vertikalen Längsmittelebene 19 der Profilschiene 2 weist der Rollenhalter 64 unterseitig an seiner Bodenplatte 69 zwei parallel zueinander verlaufende Führungsleisten 79 und 80 auf, welche in jeweils einer entsprechend oberseitig im Bodenelement 75 der Profilschiene 2 eingelassene Führungsnuten 81 und 82 formschlüssig und in Längsrichtung verschiebbar eingreifen. Durch diese Führung des Rollenhalters 64 über die Führungsleiste 79, 80 und die Führungsnuten 81 und 82 ist der Rollenhalter 64 in der Profilschiene 2 längsverschiebbar derart geführt, daß die Umlenkachse 55 quer zur vertikalen Längsmittelebene bzw. rechtwinklig dazu verlaufend ausgerichtet ist.

Wie aus Fig. 4 ersichtlich ist, weist der Rollenhalter 64 zur Stirnplatte 61 der Profilschiene 2 hin eine Stirnwand 83 auf, welche einerseits mit der Bodenplatte 69 und andererseits mit den beiden Seitenwänden 67 und 68 des Rollenhalters 64 einstückig verbunden ist. Zur Längsverschiebung der Umlenkachse 55 in der Profilschiene 2 zum Spannen des Zahnriemens 54 ist eine Spannschraube 84 vorgesehen, welche in ein entsprechendes Einschraubgewinde 85 der Stirnwand 83 eingeschraubt ist. Das Einschraubgewinde ist dabei zentral in der Stirnwand 82 angeordnet und liegt mit seiner Längsmittelachse 86 im montierten Zustand sowohl in gleicher Höhe wie die Drehachse 87 der Umlenkachse 55 sowie in der vertikalen Längsmittelebene 19 der Profilschiene 2 (Fig. 2). Durch diese zentrale Anordnung des Einschraubgewindes 58 zusammen mit der Spannschraube 84 wird ein unbeabsichtigtes Verkanten des Rollenhalters 64 beim Spannen des Zahnriemens 54, d.h. beim Längsverschieben des Rollenhalters 64 in der Profilschiene 2 sicher verhindert.

Wie aus Fig. 4 ersichtlich ist, ist die Spannschraube 84 in einer Einsenkung 87 der Stirnplatte 61 versenkt angeordnet. Zum Spannen bzw. zum Betätigen der Spannschraube 84 ist die Verwendung beispielsweise eines Drehmomentschlüssels vorgesehen, so daß bei vorgegebenem Drehmoment eine definierte Zugkraft durch die Spannschraube 84 auf den Rollenhalter 64 aufbringbar ist und somit auch der Zahnriemen 54 mit einer definierten Zugspannung vorgespannt wird. Bei Erreichen einer gewünschten Zugkraft nimmt der Rollenhalter 64 dementsprechend eine bestimmte Spannposition in der Stellschiene 2 ein. Zum Fixieren dieser Spannposition, wie diese beispielhaft in Fig. 4 dargestellt ist, ist eine Klemmschraube 88 vorgesehen, welche durch ein entsprechendes Durchgangsgewinde 89 der Stirnplatte 61 hindurchgeschraubt ist und gegen die stirnplattenseitige Außenfläche 90 der Stirnwand 83 des Rollenhalters 64 drückt. Durch diese Klemmschraube 88 wird das Gewindereibmoment zwischen der Spannschraube 84 und dem Einschraubgewinde 83 der Stirnwand 82 erhöht, so daß ein selbständiges Lösen der Spannschraube 84 verhindert wird.

Da die Klemmschraube 88 beim vorliegenden Ausführungsbeispiel im Abstand zur Spannschraube 84 unterhalb von dieser Spannschraube 84 angeordnet ist, wird durch die Klemmschraube 88 auf den Rollenhalter 64 ein gewisses Kippmoment ausgeübt, so daß der Rollenhalter 64 mit seinen beiden Seitenwänden 67 und 68 zwischen den Lagerstegen 72 und 73 und dem Bodenelement 75 bei entsprechend vorgesehenem minimalen Spiel verkanten kann und somit in der Profilschiene 2 klemmend gehalten ist. Durch diese zusätzliche Verklemmung durch das über die Klemmschraube 88 aufgebrachte Kippmoment ist der Rollenhalter 64 zusätzlich in der Profilschiene 2 gegen eine unbeabsichtigte Längsverschiebung gesichert. Um die für diese Klemmung notwendige Kippbewegung sicher zu ermöglichen, ist zwischen der Stirnplatte 61 und der Spannschraube 84 eine entsprechend sphärisch zur Stirnplatte 61 hin ausgebildete Schwenkplatte 91 vorgesehen, durch welche die Spannschraube 84 hindurchragt und über welche sich die Spannschraube 84 schwenkbar an der Stirnplatte 61 der Profilschiene 2 abstützt.

Fig. 7 zeigt den Rollenhalter 64 in perspektivischer Darstellung. Es ist erkennbar, daß der Rollenhalter 64 im wesentlichen einen etwa U-förmigen Querschnitt aufweist und daß dessen Seitenwände 67 und 68 sowohl über die Bodenplatte 69 als auch über die Stirnwand 83 miteinander verbunden sind. In der Stirnwand 83 ist das Einschraubgewinde 85 entsprechend zentriert angeordnet, wobei in den beiden Seitenwänden 67 und 68 entsprechende Einsenkungen 92 und 93 sowie Durchgangsbohrungen 94 und 95 zur Aufnahme der Kugellager 65 bzw. 66 aus Fig. 5 bzw. zur Aufnahme der Umlenkachse 55 vorgesehen sind.

Fig. 6 zeigt einen Schnitt VI - VI aus Fig. 2 durch die Antriebswelle und die Montageplatte 39 für den in der Zeichnung nicht dargestellten Stellmotor. Die Montageplatte 39 ist außenseitig mit der Stegwand 21 des Lagerelementes 15 verschraubt und verläuft rechtwinklig zur Antriebswelle 16. Das Lagerelement 15 weist dabei dasselbe Querschnittsprofil auf wie die Profilschiene 2 und ist ebenfalls mit zwei voneinander beabstandeten Lagerstegen 72/1 bzw. 73/1 versehen, die von den Stegwänden 20 und 21 ausgehend nach innen gerichtet sind und einen Längsdurchbruch 74/1 bilden. Die Bodenplatte 75/1 des Lagerelementes 15 weist ebenfalls Führungsnuten 81/1 und 82/1 auf, welchen beim vorliegenden Ausführungsbeispiel allerdings keinerlei Funktion zugeordnet ist.

Die beiden Durchgangsbohrungen 50 sind jeweils in den Verbindungsbereichen zwischen den Stegwänden 20 und 21 und dem Bodenelement 75/1 angeordnet und werden von den Befestigungsschrauben 51 durchragt. Die weitere genaue Lagerung und Zentrierung der Antriebszahnrolle 22 auf der Antriebswelle 16 wurde bereits zu Fig. 2 beschrieben, so daß diesbezüglich auf die dortigen Ausführungen verwiesen wird. In Fig. 6 sind die entsprechenden Bezugsziffern eingetragen, so daß die Beschreibung zu Fig. 2 auch auf die Darstellung in Fig. 6 übertragen werden kann.

Weiter ist in Fig. 6 erkennbar, daß auf dem äußeren Ende 30 der Antriebswelle 16 die Zahnrolle 31 angeordnet ist, welche durch die Paßfederverbindung 32 mit dieser in drehfester Verbindung steht. Die Zahnrolle 31 ist über den Zahnriemen 38 mit einer weiteren Zahnrolle 97 in getrieblicher Verbindung, wobei die Zahnrolle 97 auf der Antriebswelle des Stellmotors drehfest montiert ist (in der Zeichnung nicht dargestellt). Es ist erkennbar, daß die Antriebswelle 16 der Antriebszahnrolle 22 parallel zum Bodenelement 75/1 des Lagerelementes 15 verläuft und beidseitig in den im wesentlichen vertikal zum Bodenelement 75/1 ausgerichteten Stegwänden 20 und 21 des Lagerelementes 15 über die beiden Kugellager 17 und 18 drehbar gelagert ist.

Durch die erfindungsgemäße Lineareinheit wird eine Lineareinheit zur Verfügung gestellt, welche über einen in einfacher Weise präzise einstellbaren Zahnriementrieb verfügt, so daß ein Höchstmaß an Präzision beim Positionieren des Stellschlittens auf den Führungsschienen erreichbar ist. Desweiteren ist die Antriebseinheit, bestehend aus primärem Zahnriementrieb und Antriebswelle, durch die Aufteilung des Grundkörpers in ein Lagerelement und eine Profilschiene, unabhängig von unterschiedlichen Gesamtlängen vormontierbar und an Lager legbar, so daß erheblich kürzere Lieferzeiten für Linearantriebe unterschiedlicher Baulänge erreichbar sind.

## Patentansprüche

1. Lineareinheit (1) mit einem motorischen Stellantrieb für einen auf Führungsschienen (3, 4) eines aus einer hohlen Profilschiene (2) bestehenden Grundkörpers zwischen zwei Endanschlägen (13, 14) längs verschiebbaren Stellschlitten (5), der mit den Enden eines in Verschieberichtung verlaufenden, über eine Umlenkzahnrolle (56) und über eine von einem Stellmotor angetriebene Antriebszahnrolle (22) gespannten Zahnriemens (54) verbunden ist, wobei die Umlenkzahnrolle (56) mittels einer Spanneinrichtung (84, 64) relativ zur Antriebszahnrolle (22) verstellbar und in einer bestimmten Stellung fixierbar ist,
**dadurch gekennzeichnet,**
**daß** die Umlenkzahnrolle (56) in einem Rollenhalter (64) gelagert ist, der mit zwei durch eine quer verlaufende Stirnwand (83) verbundenen, längsseitigen Seitenwänden (67, 68) endseitig im Hohlraum des Grundkörpers (2) angeordnet und durch eine zentrale Spannschraube (84), welche die Stirnwand (83) mit einer Stirnplatte (61) des Grundkörpers (2) verbindet, mittels eines auf eine bestimmte Zugspannung einstellbaren Drehmomentschlüssels in seine Spannposition bringbar und in dieser Spannposition mittels einer entfernt von der Spannschraube (84) angeordneten Klemmschraube (88) durch Verklemmen und/oder Verkanten im Grundkörper (2) fixierbar ist.

2. Lineareinheit nach Anspruch 1, **dadurch gekennzeichnet, daß** sich die Seitenwände (67, 68) des Rollenhalters (64) im Hohlraum der Profilschiene (2) jeweils von einem unteren Bodenelement (75) zu der Innenfläche eines jeweils von einer Stegwand (70, 71) der Profilschiene (2) nach innen vorspringenden Lagersteges (72, 73) erstrecken.

3. Lineareinheit nach Anspruch 2, **dadurch gekennzeichnet, daß** die Spannschraube (84) in Achshöhe der Umlenkzahnrolle (56) angeordnet ist und daß die Klemmschraube (88) in der Nähe des oberen oder unteren Randes der Stirnwand (83) des Rollenhalters (64) in einer axialen Gewindebohrung (89) der Stirnplatte (61) der Profilschiene (2) angeordnet ist und in Längsrichtung auf die Stirnwand (83) des Rollenhalters (64) einwirkt.

4. Lineareinheit nach Anspruch 2 oder 3, **dadurch gekennzeichnet, daß** die Klemmschraube in einer Gewindebohrung der Stegwände (70, 71) der Profilschiene (2) angeordnet ist und in Querrichtung auf den Rollenhalter (64) einwirkt.

5. Lineareinheit nach einem der Ansprüche 1 bis 4, **dadurch gekennzeichnet, daß** der Rollenhalter (64) unterseitig wenigstens eine in Längsrichtung verlaufende Führungsleiste (79, 80) aufweist, die in einer gleichgerichteten Führungsnut (81, 82) des Bodenelementes (75) der Profilschiene (2) geführt ist.

6. Lineareinheit nach Anspruch 5, **dadurch gekennzeichnet, daß** eine die beiden Seitenwände (67, 68) des Rollenhalters (64) miteinander verbindende Bodenplatte (69) unterseitig zwei parallele Führungsleisten (79, 80) aufweist, die in zwei Führungsnuten (81, 82) des Bodenelementes (75) der Profilschiene (2) geführt sind.

7. Lineareinheit nach Anspruch 1, **dadurch gekennzeichnet, daß** eine mit der Antriebszahnrolle (22) und einer zweiten Zahnrolle (31) versehene Antriebswelle (16) in der Längsmitte eines am einen Ende der Profilschiene (2) angesetzten Lagerelementes (15) gelagert ist, an dessen einer Längsseite eine Montageplatte (39) des Stellmotors befestigbar ist und das auf seinen beiden Stirnflächen (45, 48) mit Bohrungen (49, 50) versehen ist, die in Form und Anordnung zu einer vertikalen Symmetrieebene (19) symmetrisch sind und die wahlweise für die Aufnahme von Befestigungsschrauben (51) und Zentrierzapfen verwendbar sind.

8. Lineareinheit nach Anspruch 5, **dadurch gekennzeichnet, daß** das Lagerelement (15) dasselbe Querschnittsprofil aufweist wie die Profilschiene (2).

## Claims

1. Linear unit (1) with a motor actuator for an actuator carriage (5) which is longitudinally displaceable between two end stops (13, 14) on guide rails (3, 4) of a basic body consisting of a hollow mounting channel (2), the carriage being connected to the ends of a tensioned toothed belt (54) running in the direction of displacement via a toothed guide roller (56) and via a toothed driving roller (22) driven by an actuator, the toothed guide roller (56) being adjustable relative to the toothed driving roller (22) by means of a tensioning device (84, 64) and being fixable in a certain position, **characterised in that** the toothed guide roller (56) is mounted in a roller holder (64) which is arranged with two long-side side walls (67, 68) connected by a transversely extending end wall (83) at the end face in the hollow space of the basic body (2) and which owing to a central tensioning screw (84) connecting the end wall (83) to an end plate (61) of the basic body (2), can be brought into its tensioning position by means of a torque key adjustable to a certain tensile stress and can be fixed in the basic body (2)in this tensioning position by means of a locking screw (88) arranged at a distance from the tensioning screw (84) by jamming and/or canting.

2. Linear unit according to claim 1, **characterised in that** the side walls (67, 68) of the roller holder (64) in the hollow space of the mounting channel (2) each extend from a lower base element (75) to the inner face of a bearing web (72, 73) projecting inwardly from a respective web wall (70, 71) of the mounting channel (2).

3. Linear unit according to claim 2, **characterised in that** the tensioning screw (84) is arranged at the shaft height of the toothed guide roller (56) and **in that** the locking screw (88) is arranged in the vicinity of the upper or lower edge of the end wall (83) of the roller holder (64) in an axial threaded hole (89) of the end plate (61) of the mounting channel (2) and acts in the longitudinal direction on the end wall (83) of the roller holder (64).

4. Linear unit according to claim 2 or 3, **characterised in that** the locking screw is arranged in a threaded hole of the web walls (70, 71) of the mounting channel (2) and acts in the transverse direction on the roller holder (64).

5. Linear unit according to any of claims 1 to 4, **characterised in that** the lower side of the roller holder (64) has at least one guide bead (79, 80) extending in the longitudinal direction and guided in a guide groove (81, 82) of the base element (75) of the mounting channel (2) extending in the same direction.

6. Linear unit according to claim 5, **characterised in that** a base plate (64) connecting the two side walls (67, 68) of the roller holder (64) to one another has two parallel guide beads (79, 80) at its lower side which are guided in two guide grooves (81, 82) of the base element (75) of the mounting channel (2).

7. Linear unit according to claim 1, **characterised in that** a drive shaft (16) provided with the toothed driving roller (22) and a second toothed roller (31) is mounted in the longitudinal centre of a bearing element (15) placed on an end of the mounting channel (2), to the one long side of which bearing element (15) an assembly plate (39) of the actuator can be fastened which is provided on both end faces (45, 48) with holes (49, 50) which are symmetrical in shape and arrangement with a vertical plane of symmetry (19) and which can selectively be used for receiving fastening screws (51) and centring pins.

8. Linear unit according to claim 5, **characterised in that** the bearing element (15) has the same cross-sectional profile as the mounting channel (2).

## Revendications

1. Actionneur linéaire (1) à entraînement motorisé, destiné à un chariot mobile (5) qui peut coulisser longitudinalement, entre deux butées extrêmes (13, 14), sur des glissières de guidage (3, 4) d'un corps de base constitué d'un rail profilé creux (2), et qui est relié aux extrémités d'une courroie crantée (54) s'étendant dans la direction du coulissement et tendue par l'intermédiaire d'un rouleau denté de renvoi (56), et d'un rouleau denté d'entraînement (22) mené par un servomoteur, le rouleau denté de renvoi (56) étant réglable par rapport au rouleau denté d'entraînement (22), au moyen d'un système de tension (84, 64), et pouvant être arrêté dans une position déterminée,
**caractérisé par le fait**
**que** le rouleau denté de renvoi (56) est monté dans un porte-rouleau (64) qui est logé par ses extrémités dans la cavité du corps de base (2), par deux parois latérales longitudinales (67, 68) solidarisées par une paroi frontale (83) s'étendant transversalement ; peut être amené à sa position serrée, par l'intermédiaire d'une vis centrale de serrage (84) reliant la paroi frontale (83) à une plaque frontale (61) du corps de base (2), au moyen d'une clé dynamométrique pouvant être réglée sur une contrainte de traction déterminée ; et peut être consigné à demeure dans cette position serrée, au moyen d'une vis de coincement (88) située à distance de ladite vis de serrage (84), par coincement et/ou blocage dans le corps de base (2).

2. Actionneur linéaire selon la revendication 1, **caractérisé par le fait que** les parois latérales (67, 68) du porte-rouleau (64) s'étendent respectivement, dans la cavité du rail profilé (2), depuis un élément inférieur de fond (75) jusqu'à la face intérieure d'une membrure de portée (72, 73) saillant respectivement, vers l'intérieur, à partir d'une aile (70, 71) dudit rail profilé (2).

3. Actionneur linéaire selon la revendication 2, **caractérisé par le fait que** la vis de serrage (84) est disposée à la hauteur de l'axe du rouleau denté de renvoi (56); et **par le fait que** la vis de coincement (88) se trouve à proximité du bord supérieur ou inférieur de la paroi frontale (83) du porte-rouleau (64), dans un trou axial taraudé (89) de la plaque frontale (61) du rail profilé (2), et agit longitudinalement sur ladite paroi frontale (83) dudit porte-rouleau (64).

4. Actionneur linéaire selon la revendication 2 ou 3, **caractérisé par le fait que** la vis de coincement est logée dans un trou taraudé des ailes (70, 71) du rail profilé (2), et agit transversalement sur le porte-rouleau (64).

5. Actionneur linéaire selon l'une des revendications 1 à 4, **caractérisé par le fait que** le porte-rouleau (64) présente, à sa face inférieure, au moins un listel de guidage (79, 80) s'étendant dans le sens longitudinal et guidé dans une rainure de guidage (81, 82) de même orientation, pratiquée dans l'élément de fond (75) du rail profilé (2).

6. Actionneur linéaire selon la revendication 5, **caractérisé par le fait qu'**une plaque de fond (69), reliant l'une à l'autre les deux parois latérales (67, 68) du porte-rouleau (64), comporte, à sa face inférieure, deux listels parallèles de guidage (79, 80) guidés dans deux rainures de guidage (81, 82) de l'élément de fond (75) du rail profilé (2).

7. Actionneur linéaire selon la revendication 1, **caractérisé par le fait qu'**un arbre d'entraînement (16), pourvu du rouleau denté d'entraînement (22) et d'un second rouleau denté (31), est monté au centre longitudinal d'un élément de palier (15) qui est rapporté sur l'une des extrémités du rail profilé (2); à l'un des côtés longitudinaux duquel une plaque de montage (39) du servomoteur peut être fixée; et qui est muni, sur ses deux faces extrêmes (45, 48), de perçages (49, 50) dont la forme et la disposition sont symétriques par rapport à un plan vertical de symétrie (19), et qui peuvent être sélectivement utilisés pour recevoir des vis de fixation (51) et des tenons de centrage.

8. Actionneur linéaire selon la revendication 5, **caractérisé par le fait que** l'élément de palier (15) présente le même profil de section transversale que le rail profilé (2).
